# EUROPEAN PATENT APPLICATION

(11) **EP 4 787 907 A1**
(43) Date of publication of application: **05.08.2026**
(21) Application number: 24870513.9
(22) Date of filing: 18.09.2024
(51) Int. Cl.: H04W 4/20

(54) **INFORMATION SENDING METHOD AND APPARATUS, INFORMATION RECEIVING METHOD AND APPARATUS, AND RELATED DEVICE**

(30) Priority: 25.09.2023 CN 202311242556
(71) Applicant: Vivo Mobile Communication Co., Ltd., Dongguan, Guangdong 523863 (CN)
(72) Inventor: ZHOU, Tong, Dongguan, Guangdong 523863 (CN); SHI, Yuan, Dongguan, Guangdong 523863 (CN); WU, Hao, Dongguan, Guangdong 523863 (CN)
(74) Representative: Walaski, Jan Filip
(86) International application number: PCT/CN2024/119294
(87) International publication number: WO 2025/066969

(57) **Abstract**

The present application discloses an information sending method and apparatus, an information receiving method and apparatus, and a related device, belonging to the technical field of communications. The information sending method in embodiments of the present application comprises: a terminal sends target information to a network side device, wherein the target information comprises at least one of the following: first information, used for indicating a first pattern, wherein the first pattern is a beam pattern or a measurement resource pattern associated with a model input of a target model, and the target model is used for the terminal to perform model reasoning; and second information, used for indicating a reporting capability of the terminal to a first result, wherein the first result is a reasoning result of the model reasoning.

## Description

### CROSS-REFERENCE TO RELATED APPLICATIONS

This application claims priority to Chinese Patent Application No. 202311242556.7, filed on September 25, 2023, which is incorporated herein by reference in its entirety.

### TECHNICAL FIELD

This application pertains to the field of communication technologies, and specifically relates to an information sending method and apparatus, an information receiving method and apparatus, and a related device.

### BACKGROUND

In a related technology, when performing beam management based on artificial intelligence (Artificial Intelligence, AI), a terminal performs model inference. The terminal inputs all or a part of measured historical beam quality into a model, and determines a strongest transmit beam based on a strongest-beam identifier or beam quality of all beams that is output by the model. When configuring the terminal for model inference used for AI-based beam management, a network side device performs beam measurement configuration for the terminal based on a general configuration. Because the general configuration may not match a beam pattern or a measurement resource pattern required by the terminal for model inference, an effect of model inference performed by the terminal is relatively poor.

### SUMMARY

Embodiments of this application provide an information sending method and apparatus, an information receiving method and apparatus, and a related device, which can solve a problem that an effect of model inference performed by a terminal is relatively poor.

According to a first aspect, an information sending method is provided, including:
sending, by a terminal, target information to a network side device, where
the target information includes at least one of the following:
   first information, where the first information is used to indicate a first pattern, the first pattern is a measurement resource pattern associated with model inputs of a target model, and the target model is used by the terminal to perform model inference; and
   second information, where the second information is used to indicate a terminal capability of reporting the first result, and the first result is an inference result of the model inference.

According to a second aspect, an information receiving method is provided, including:
receiving, by a network side device, target information sent by a terminal, where
the target information includes at least one of the following:
   first information, where the first information is used to indicate a first pattern, the first pattern is a measurement resource pattern associated with model inputs of a target model, and the target model is used by the terminal to perform model inference; and
   second information, where the second information is used to indicate a terminal capability of reporting the first result, and the first result is an inference result of the model inference.

According to a third aspect, an information sending apparatus is provided, where a terminal includes the information sending apparatus, and the apparatus includes:
a sending module, configured to send target information to a network side device.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

According to a fourth aspect, an information receiving apparatus is provided, where a network side device includes the information receiving apparatus, and the apparatus includes:
a receiving module, configured to receive target information sent by a terminal.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

According to a fifth aspect, a terminal is provided. The terminal includes a processor and a memory. The memory stores a program or instructions capable of running on the processor, and the program or the instructions are executed by the processor to implement the steps of the method according to the first aspect.

According to a sixth aspect, a network side device is provided. The network side device includes a processor and a memory. The memory stores a program or instructions capable of running on the processor, and the program or the instructions are executed by the processor to implement the steps of the method according to the second aspect.

According to a seventh aspect, a terminal is provided, including a processor and a communication interface. The communication interface is configured to:
send target information to a network side device.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

According to an eighth aspect, a network side device is provided, including a processor and a communication interface. The communication interface is configured to:
receive target information sent by a terminal.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

According to a ninth aspect, an information receiving and sending system is provided, including a terminal and a network side device. The terminal may be configured to perform the steps of the method according to the first aspect, and the network side device may be configured to perform the steps of the method according to the second aspect.

According to a tenth aspect, a readable storage medium is provided. The readable storage medium stores a program or instructions, and the program or the instructions are executed by a processor to implement the steps of the method according to the first aspect or the steps of the method according to the second aspect.

According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored on a storage medium, and the computer program/program product is executed by at least one processor to implement the steps of the method according to the first aspect or the steps of the method according to the second aspect.

In the embodiments of this application, the terminal sends the target information to the network side device. The target information includes at least one of the following: the first information, where the first information is used to indicate the first pattern, the first pattern is the measurement resource pattern associated with the model inputs of the target model, and the target model is used by the terminal to perform model inference; and the second information, where the second information is used to indicate the terminal capability of reporting the first result, and the first result is the inference result of the model inference. In this way, the terminal sends the first information or the second information to the network side device. The network side device can configure a beam pattern or a measurement resource pattern for the terminal based on the first pattern indicated by the first information, or the network side device can configure the reporting time of the inference result for the terminal based on the terminal capability of reporting the first result indicated by the second information. In this way, when the network side device configures the terminal for model inference used for AI-based beam management, the configuration for the terminal can meet an expectation or a capability of the terminal, thereby improving an effect of model inference performed by the terminal.

### BRIEF DESCRIPTION OF DRAWINGS

FIG. 1 is a block diagram of a wireless communication system applicable to an embodiment of this application;
FIG. 2 is a flowchart of an information sending method according to an embodiment of this application;
FIG. 3 is a flowchart of an information receiving method according to an embodiment of this application;
FIG. 4 is a structural diagram of an information sending apparatus according to an embodiment of this application;
FIG. 5 is a structural diagram of an information receiving apparatus according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network side device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on embodiments of this application shall fall within the protection scope of this application.

It should be noted that the terms "first", "second", and the like in the specification and claims of this application are intended to distinguish between similar objects but do not necessarily indicate a specific order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this specification and the claims represents at least one of the connected objects. For example, "A or B" includes three solutions, that is, a solution 1: including A and not including B; a solution 2: including B and not including A; and a solution 3: including both A and B. The term "indication" in the specification and claims of this application may be an explicit indication, or may be an implicit indication. The explicit indication may be understood as follows: A sender explicitly notifies, in a sent indication, a receiver of an operation that needs to be performed or a requested result. The implicit indication may be understood as follows: The receiver performs determining based on the indication sent by the sender, and determines, based on a determining result, the operation that needs to be performed or the requested result.

It should be noted that, a technology described in the embodiments of this application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to applications other than NR system applications, for example, a 6th generation (6^{th} Generation, 6G) communication system.

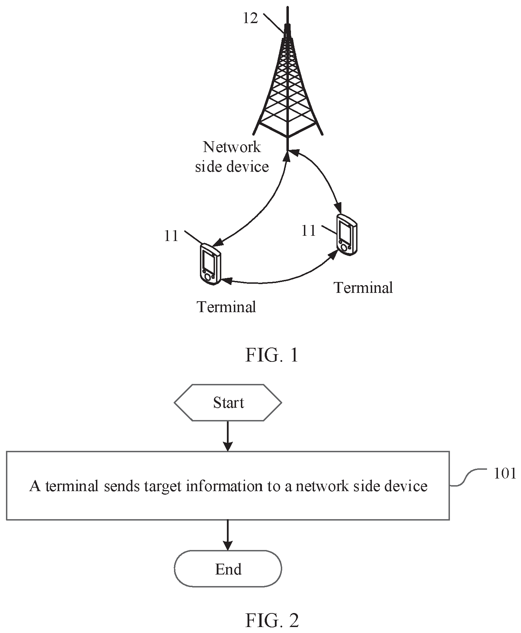

FIG. 1 is a block diagram of a wireless communication system applicable to an embodiment of this application. The wireless communication system includes a terminal 11 and a network side device 12. The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a laundry machine, or a furniture), a gaming console, a personal computer (personal computer, PC), a teller machine, a self-service machine, or another terminal-side device. The wearable device includes a smart watch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. It should be noted that a specific type of the terminal 11 is not limited in this embodiment of this application. The network side device 12 may include an access network device or a core network device. The access network device may also be referred to as a wireless access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another suitable term in the field. The base station is not limited to a specific technical term, provided that same technical effects are achieved. It needs to be noted that, in this embodiment of this application, a description is provided only by using a base station in an NR system as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, a core network device in the NR system is merely used as an example for description, and a specific type of the core network device is not limited.

With reference to the accompanying drawings, the following describes in detail, by using some embodiments and application scenarios thereof, an information sending method and apparatus, an information receiving method and apparatus, and a related device that are provided in the embodiments of this application.

Referring to FIG. 2, FIG. 2 is a flowchart of an information sending method according to an embodiment of this application. As shown in FIG. 2, the information sending method includes the following steps.

Step 101: A terminal sends target information to a network side device.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

The first information may be used to indicate a first pattern supported by the terminal.

In addition, the model inference may be using the target model to obtain, by inference, an inference result to be reported by the terminal.

The first information may include at least one piece of first set information, where the first set information is used to indicate a first pattern of at least one time unit. Alternatively, the first information may include at least one piece of first set information and a target dataset identifier. The target dataset identifier is associated with at least one beam, and beams corresponding to the first pattern indicated by the first set information are determined based on the target dataset identifier. Alternatively, the target dataset identifier is associated with at least one measurement resource, and a measurement resource corresponding to the first pattern indicated by the first set information is determined based on the target dataset identifier.

In an example in which the first information includes a plurality of pieces of first set information, the first information may include first set information 1, first set information 2, and first set information 3. For example, a first pattern indicated by the first set information 1 is (P1, P2, P3, P4), a first pattern indicated by the first set information 2 is (P3, P4, P1, P2), and a first pattern indicated by the first set information 3 is (P2, P3, P4, P1). In this way, the first pattern indicated by the first information is {(P1, P2, P3, P4), (P3, P4, P1, P2), (P2, P3, P4, P1)}.

In an implementation, the first information may include at least one piece of first set information. The first set information includes at least one of the following: at least one piece of second set information; first indication information, used to indicate a quantity of pieces of second set information included in the first set information; and second indication information, used to indicate an ordering relationship of first patterns associated with the second set information included in the first set information. The second set information is used to indicate a first pattern of one time unit. For example, the first set information includes four pieces of second set information, and the four pieces of second set information are used to respectively indicate first patterns P1, P2, P3, and P4.

In an implementation, the first pattern may be a transmit beam pattern or a measurement resource pattern associated with the model inputs of the target model. The terminal sends the first information to the network side device, and the network side device may determine, based on the first information, the transmit beam pattern or the measurement resource pattern used for model inference.

In an implementation, the terminal capability of reporting the first result may be represented by a time unit in which the terminal is capable of reporting the first result. The terminal sends the second information to the network side device, and the second information is used to indicate the time unit in which the terminal is capable of reporting the first result.

It should be noted that the target model may be an AI model. It should be noted that the AI model in this embodiment of this application may also be referred to as an AI unit, a machine learning (Machine learning, ML) model, an ML unit, an AI structure, an AI function, an AI feature, a neural network, a neural network function, or the like, or the AI model may be a processing unit that can implement a specific algorithm, formula, processing procedure, capability, or the like related to AI, or the AI model may be a processing method, algorithm, function, module, or unit for a specific dataset, or the AI model may be a processing method, algorithm, function, module, or unit that runs on AI or ML-related hardware such as a graphic processing unit (Graphic processing unit, GPU), a neural network processing Unit (Neural network Processing Unit, NPU), a tensor processing unit (Tensor processing unit, TPU), an application specific integrated circuit (Application Specific Integrated Circuit, ASIC), or the like. This is not specifically limited in this application. Optionally, the specific dataset includes an input or an output of the AI model. In addition, an identifier of the dataset may be, an identifier of a specific dataset associated with the AI model, or an identifier associated with a specific AI/ML-related scenario, environment, channel feature, or device, or an identifier of an AI/ML-related function, feature, capability, or module. This is not specifically limited in this embodiment of this application.

In a mobile communication system, more and more use cases start to incorporate artificial intelligence (Artificial Intelligence, AI). For example, at a physical layer, there are AI-based channel state information (Channel state information, CSI) feedback compression, AI-based beam management, and AI-based positioning. The 3rd generation partnership project (3rd Generation Partnership Project, 3GPP) RAN3 discusses AI-based energy saving, AI-based load balancing, and the like. In the future, more use cases incorporating AI will emerge in mobile communication systems.

In the AI-based beam management, in case of time domain prediction, the model inputs are all or a part of measured historical beam quality, and a model output is a strongest-beam identifier or beam quality of all beams. It is assumed that the terminal performs model training. In a training stage, a base station configures measurement resources corresponding to all transmit beams, and the terminal measures and obtains beam quality of all transmit beams in each time unit. For a training sample, which beams are selected as the model inputs depends on terminal implementation.

Based on the foregoing analysis, a beam pattern corresponding to beam quality that is used for the model inputs in the training stage is determined independently by the terminal. It is assumed that the model inputs include beam quality of four time units (Time unit, TU), and transmit beam patterns (pattern) used in different TUs are different.

For a 1st round of inference, four time units corresponding to the model inputs are TU1, TU2, TU3, and TU4, and four time units corresponding to the model outputs are TU5, TU6, TU7, and TU8. During the model input, patterns used are P1, P2, P3, and P4.

For a 2nd round of model inference, there are at least the following two cases:
1) Four time units corresponding to the model inputs are TU5, TU6, TU7, and TU8. Four time units corresponding to the model output are TU9, TU10, TU11, and TU12. During the model input, patterns used are P1, P2, P3, and P4, which are the same as those used in the 1st round of inference.
2) Four time units corresponding to the model inputs are TU2, TU3, TU4, and TU5. Four time units corresponding to the model output are TU6, TU7, TU8, and TU9. During the model input, patterns used are P2, P3, P4, and P1, which are different from those used in the 1st round of inference.

Based on the foregoing analysis, the following two problems exist:
Problem 1: How does the terminal notify the base station of a transmit beam pattern supported by the terminal during model inference.
Problem 2: Different continuous inference manners represent different UE capabilities. If a first continuous inference manner (where patterns in a same sequence are used in a plurality of rounds of inference) is used, it indicates that a generalization capability of a UE-side model is relatively poor, and model inference and reporting of an inference result can be performed only at a limited location. If a second continuous inference manner (where patterns in different sequences are used in a plurality of rounds of inference) is used, it indicates that UE has a relatively good generalization capability and can perform beam prediction in consecutive TUs and report an inference result.

In a related technology, when the UE performs model inference, during model registration, the UE reports to the network side on information related to model inference, such as a use condition (network configuration information, network assistance information), input/output format information, and the like. Because the model registration is applicable to various AI use cases, the model registration is general model registration, which cannot address the problem 1 and the problem 2 faced in a specific scenario of time domain continuous inference for AI-based beam management.

For the problem 1 and the problem 2, this embodiment of this application provides a model registration method for the scenario of time domain continuous inference, which is used to indicate to a network side device a beam pattern required for model inference as well as a generalization capability of a model. The first information is sent to the network side device by using the terminal, so that the network side device can be notified of the beam pattern or the measurement resource pattern associated with the model inputs of the target input. The second information is sent to the network side device by using the terminal, so that the network side device can be notified of the reporting capability of the terminal for the inference result of the model inference, and the network side device can determine, based on the reporting capability of the terminal for the inference result of the model inference, a continuous inference manner supported by the terminal.

It should be noted that the network side device may configure the terminal for model inference based on the target information. The network side device may configure a beam pattern or a measurement resource pattern for the terminal based on the first information sent by the terminal, so that when performing beam measurement configuration for the terminal, the network side device can configure a beam pattern or a measurement resource pattern required by the terminal for model inference, thereby improving an effect of model inference performed by the terminal. Alternatively, the network side device may configure the reporting time of the inference result of model inference for the terminal based on the second information sent by the terminal. In this way, when configuring the reporting time of the inference result for the terminal, the network side device can consider a capability of the terminal, thereby improving an effect of model inference performed by the terminal.

In this embodiment of this application, the terminal sends the target information to the network side device. The target information includes at least one of the following: the first information, where the first information is used to indicate the first pattern, the first pattern is the measurement resource pattern associated with the model inputs of the target model, and the target model is used by the terminal to perform model inference; and the second information, where the second information is used to indicate the terminal capability of reporting the first result, and the first result is the inference result of the model inference. In this way, the terminal sends the first information or the second information to the network side device. The network side device can configure a beam pattern or a measurement resource pattern for the terminal based on the first pattern indicated by the first information, or the network side device can configure the reporting time of the inference result for the terminal based on the terminal capability of reporting the first result indicated by the second information. In this way, when the network side device configures the terminal for model inference used for AI-based beam management, the configuration for the terminal can meet an expectation or a capability of the terminal, thereby improving an effect of model inference performed by the terminal.

Optionally, the first information includes:
at least one piece of first set information, where the first set information is used to indicate a first pattern of at least one time unit.

The first information may include a plurality of pieces of first set information, or the first information may include one piece of first set information. In an example in which the first information includes one piece of first set information, the first information may include first set information 1, and a first pattern indicated by the first set information 1 is (P1, P2, P3, P4).

In addition, the first pattern of the at least one time unit may be a first pattern of at least one sending occasion (occasion) of a transmit beam.

In addition, the first information may include only at least one piece of first set information. Alternatively, the first information may include a target dataset identifier and at least one piece of first set information. The target dataset identifier is associated with at least one beam, and beams corresponding to the first pattern indicated by the first set information are determined based on the target dataset identifier. Alternatively, the target dataset identifier is associated with at least one measurement resource, and a measurement resource corresponding to the first pattern indicated by the first set information is determined based on the target dataset identifier.

It should be noted that the first information may include only at least one piece of first set information, and the beams corresponding to the first pattern indicated by the first set information are determined based on the target dataset identifier, or the measurement resource corresponding to the first pattern indicated by the first set information is determined based on the target dataset identifier. This target dataset identifier may be preconfigured by the network side device for the terminal, or may be agreed upon between the network side device and the terminal.

In this implementation, the first information includes at least one piece of first set information, and the network side device can configure a beam pattern or a measurement resource pattern for the terminal based on the first pattern indicated by the at least one piece of first set information. In this way, when the network side device configures the terminal for model inference used for AI-based beam management, the configuration for the terminal can meet an expectation of the terminal, thereby improving an effect of model inference performed by the terminal.

Optionally, the first information further includes:
a target dataset identifier.

The target dataset identifier is associated with at least one beam, and beams corresponding to the first pattern indicated by the first set information are determined based on the target dataset identifier.

Alternatively, the target dataset identifier is associated with at least one measurement resource, and a measurement resource corresponding to the first pattern indicated by the first set information is determined based on the target dataset identifier.

The target dataset identifier may be a dataset identifier of a dataset used for model training.

In this implementation, the first information includes at least one piece of first set information and the target dataset identifier, and the network side device can configure a beam pattern or a measurement resource pattern for the terminal based on a first pattern determined based on the at least one piece of first set information and the target dataset identifier.

Optionally, the first set information includes at least one of the following:
at least one piece of second set information;
first indication information, used to indicate a quantity of pieces of second set information included in the first set information; and
second indication information, used to indicate an ordering relationship of first patterns associated with the second set information included in the first set information.

The second set information is used to indicate a first pattern of one time unit.

The first set information includes one or more pieces of second set information. The second set information indicating a first pattern of one time unit may mean that the second set information indicates a first pattern of at least one sending occasion (occasion) of a transmit beam. For example, the first pattern indicated by the second set information is P1, the first pattern indicated by the second set information is P2, the first pattern indicated by the second set information is P3, or the like.

In addition, the first indication information indicates the quantity of pieces of second set information included in the first set information. In an example in which the first pattern indicated by the first set information is (P1, P2, P3, P4), a value of the first indication information may be 4.

In addition, the second indication information indicates the ordering relationship of the first patterns associated with the second set information included in the first set information. For example, the second indication information may indicate a location of a starting first pattern. In an example in which a reference pattern is (P1, P2, P3, P4), the second indication information may be 0001. In this case, the second indication information indicates that the ordering relationship of the first patterns associated with the second set information included in the first set information is: P4, P1, P2, P3. It should be noted that the at least one piece of second set information included in the first set information may be used to indicate the reference pattern, or the reference pattern may be preconfigured or agreed upon in a protocol.

Optionally, in a case that the first information includes a target dataset identifier, the second set information includes at least one of the following:
third indication information, used to indicate a first beam in at least one beam associated with the target dataset identifier; and
fourth indication information, used to indicate a target measurement resource in at least one measurement resource associated with the target dataset identifier.

The first pattern indicated by the second set information includes the first beam, or
the first pattern indicated by the second set information includes the target measurement resource, or
the first pattern indicated by the second set information includes a second beam in a case that the target measurement resource is associated with the second beam.

In an implementation, the target dataset identifier is associated with at least one beam, and the second set information may include the third indication information. For example, the target dataset identifier is associated with a beam 1, a beam 2, and a beam 3, and the third indication information indicates the beam 1 and the beam 2. In this case, the first pattern indicated by the second set information is a beam pattern formed by the beam 1 and the beam 2.

In an implementation, the target dataset identifier is associated with at least one measurement resource, and the second set information may include the fourth indication information. For example, the target dataset identifier is associated with RS1, RS2, and RS3, and the fourth indication information indicates the RS2 and the RS3. In this case, the first pattern indicated by the second set information is a first pattern formed by the RS2 and the RS3.

In an implementation, the target dataset identifier is associated with at least one measurement resource, and the target dataset identifier is associated with at least one beam. The second set information may include the third indication information or the fourth indication information. For example, the target dataset identifier is associated with the RS1, the RS2, and the RS3, and the target dataset identifier is associated with the beam 1, the beam 2, and the beam 3. In this case, the first pattern indicated by the second set information may be determined by using the beam 1 and the beam 2 indicated by the third indication information, or the first pattern indicated by the second set information may be determined by using the RS2 and the RS3 indicated by the fourth indication information.

Optionally, the second information includes at least one of the following:
fifth indication information, where the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, and the first resources are measurement resources corresponding to first patterns associated with the first set information under a plurality of ordering relationships; and
sixth indication information, where the sixth indication information is used to indicate ordering relationships that are of first patterns in different time unit cycles and that are supported by the terminal.

The fifth indication information may be 1-bit indication information. A quantity of time units included in one time unit cycle may be a quantity of time units corresponding to beam quality input when the terminal performs one round of model inference. Alternatively, the quantity of time units included in one time unit cycle may be determined based on the quantity of pieces of second set information included in the first set information. The quantity of time units included in one time unit cycle may be the same as the quantity of pieces of second set information included in the first set information. Alternatively, the quantity of time units included in one time unit cycle may be an integer multiple of the quantity of pieces of second set information included in the first set information. In a case that the quantity of time units included in one time unit cycle is determined based on the quantity of pieces of second set information included in the first set information, the quantity of time units included in one time unit cycle may be less than the quantity of time units corresponding to beam quality input when the terminal performs one round of model inference. For example, a beam pattern input when the terminal performs one round of model inference is: P1, P2, P1, P2, and the second set information included in the first set information is P1 and P2. In this case, the quantity of time units included in one time unit cycle may be 2 or 4.

In an implementation, the fifth indication information indicates that the terminal does not support first patterns having different ordering relationships in different time unit cycles, or the fifth indication information indicates that the terminal only supports first patterns having a same ordering relationship in different time unit cycles. For example, if a value of the fifth indication information is 0, it indicates that the terminal supports only first patterns having a same ordering relationship in different time unit cycles. For example, when the first pattern indicated by the first set information is (P1, P2, P3, P4), it indicates that the terminal supports only a first pattern in a sequence of (P1, P2, P3, P4).

In an implementation, the fifth indication information indicates that the terminal supports first patterns having different ordering relationships in different time unit cycles. For example, if the value of the fifth indication information is 1, it indicates that the terminal supports first patterns having different ordering relationships in different time unit cycles and the terminal supports patterns under all ordering relationships of the first pattern indicated by the first set information. For example, when the first pattern indicated by the first set information is (P1, P2, P3), it indicates that the terminal supports first patterns in sequences of (P1, P2, P3), (P2, P3, P1), and (P3, P2, P1).

In this implementation, the second information includes at least one of the following: the fifth indication information, where the fifth indication information is used to indicate whether the terminal supports first patterns having different ordering relationships in different time unit cycles; and the sixth indication information, where the sixth indication information is used to indicate ordering relationships that are of the first patterns in different time unit cycles and that are supported by the terminal. In this way, the network side device can determine the terminal capability of reporting the first result based on the fifth indication information or the sixth indication information, and configure the reporting time for the terminal to report the inference result. In this way, when the network side device configures the terminal for model inference used for AI-based beam management, the configuration for the terminal can meet the capability of the terminal, thereby improving an effect of model inference performed by the terminal.

Optionally, the sixth indication information includes at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

In an implementation, the sixth indication information includes the indication information of the 1st first pattern under each of the ordering relationships that are of the first patterns in different time unit cycles and that are supported by the terminal. An example in which the sixth indication information is 1010 and the first pattern indicated by the first set information is (P1, P2, P3, P4) is used. Because locations of P1 and P3 are set to 1, it indicates that the 1st first pattern in the supported ordering relationships of the first patterns includes P1 and P3. Based on an ordering relationship of each pattern in the first set information, the sixth indication information indicates that two ordering relationships of the first pattern, that is, (P1, P2, P3, P4) and (P3, P4, P1, P2) can be supported.

In an implementation, the sixth indication information includes the indication information of the last first pattern under each of the ordering relationships that are of the first patterns in different time unit cycles and that are supported by the terminal. An example in which the sixth indication information is 1010, and the first pattern indicated by the first set information is (P1, P2, P3, P4) is used. Because locations of P1 and P3 are set to 1, it indicates that the last first pattern in the supported ordering relationships of the first patterns includes P1 and P3. Based on an ordering relationship of each pattern in the first set information, the sixth indication information indicates that two ordering relationships of the first pattern, that is, (P2, P3, P4, P1) and (P4, P1, P2, P3) can be supported.

In an implementation, the sixth indication information includes the indication information of the first pattern corresponding to the time unit in which the terminal is capable of reporting the first result. An example in which the sixth indication information is 1010 and the first pattern indicated by the first set information is (P1, P2, P3, P4) is used. Because locations of P1 and P3 are set to 1, it indicates that locations of first patterns that can support reporting of the inference result include P1 and P3. After measuring the last first pattern, the terminal performs inference and reports the inference result. Therefore, the sixth indication information indicates that the last first pattern in the supported ordering relationships of the first pattern includes P1 and P3. Based on an ordering relationship of each pattern in the first set information, it can be derived that the supported ordering relationships of the first pattern are respectively P2, P3, P4, P1, and P4, P1, P2, P3.

Optionally, the fifth indication information is 1-bit indication information.

Alternatively, in a case that the first information includes at least one piece of first set information and the first set information includes at least one piece of second set information, a quantity of bits occupied by the sixth indication information is the same as the quantity of pieces of second set information included in the first set information.

Optionally, the second information is carried in at least one of the following:
a measurement restriction (Measurement restriction, MR) configuration request; or a repetition (Repetition) configuration request.

In an implementation, the fifth indication information may be a measurement restriction ON/OFF indication in the MR configuration request. For example, MR ON indicates that the terminal supports first patterns having different ordering relationships in different time unit cycles, while MR OFF indicates that the terminal does not support first patterns having different ordering relationships in different time unit cycles.

In an implementation, the fifth indication information may be a Repetition ON/OFF indication in the repetition configuration request. For example, Repetition ON indicates that the terminal supports first patterns having different ordering relationships in different time unit cycles, while Repetition OFF indicates that the terminal does not support first patterns having different ordering relationships in different time unit cycles.

Optionally, the terminal receives a target configuration sent by the network side device. The target configuration is used to indicate a second pattern or a reporting time. The second pattern is a beam pattern or a measurement resource pattern, and the reporting time is a reporting time of the inference result.

The terminal performs model inference or reporting of the inference result based on the target configuration.

The target configuration may include at least one piece of fourth set information, and the fourth set information is used to indicate a second pattern of at least one time unit. Alternatively, the target configuration may include at least one piece of fourth set information and a dataset identifier. The dataset identifier is associated with at least one beam, and a beam corresponding to the second pattern indicated by the fourth set information is determined based on the dataset identifier, or the dataset identifier is associated with at least one measurement resource, and a measurement resource corresponding to the second pattern indicated by the fourth set information is determined based on the dataset identifier.

In addition, the fourth set information may include at least one of the following: at least one piece of fifth set information; seventh indication information, used to indicate a quantity of pieces of fifth set information included in the fourth set information; and eighth indication information, used to indicate an ordering relationship of second patterns associated with the fifth set information included in the fourth set information. The fifth set information is used to indicate a second pattern of one time unit. It should be noted that a specific form of the fourth set information is similar to that of the first set information. For details, refer to the description of the first set information. Details are not described herein again. A specific form of the fifth set information is similar to that of the second set information. For details, refer to the description of the second set information. Details are not described herein again.

The reporting time may be represented by a time unit corresponding to the second pattern. For example, the second pattern indicated by the target configuration is (P1, P2, P3). In this case, the network side device may configure the terminal to report in each time unit, that is, report after measuring P1, P2, or P3; or the network side device may configure the terminal to report in a specific time unit, for example, configure the terminal to report after measuring P1.

In addition, the target configuration may be determined by the network side device based on the target information. The second pattern indicated by the target configuration may be determined based on the first pattern indicated by the first information. For example, the second pattern indicated by the target configuration may be the same as the first pattern indicated by the first information, or the second pattern indicated by the target configuration may include the first pattern indicated by the first information, or the first pattern indicated by the first information may include the second pattern indicated by the target configuration, or the like. This is not limited in this embodiment. The reporting time indicated by the target configuration may be determined based on the second information, and the reporting time indicated by the target configuration may match the reporting capability indicated by the second information. For example, the second information indicates that the terminal is capable of reporting in each time unit corresponding to the first pattern, and the reporting time indicated by the target configuration may be each time unit corresponding to the second pattern. Alternatively, the second information indicates that the terminal is capable of reporting in a specific time unit corresponding to the first pattern, and the reporting time indicated by the target configuration may be the specific time unit.

In this implementation, the terminal receives the target configuration sent by the network side device, and the target configuration is used to indicate the second pattern or the reporting time. The second pattern is a beam pattern or a measurement resource pattern, and the reporting time is the reporting time of the inference result. The terminal performs model inference or reporting of the inference result based on the target configuration. In this way, the terminal performs model inference based on the second pattern indicated by the network side device, or the terminal reports the inference result based on the reporting time indicated by the network side device, thereby improving an effect of model inference and reporting of the inference result performed by the terminal.

Optionally, that the terminal performs model inference or reporting of the inference result based on the target configuration includes:
in a case that the second pattern indicated by the target configuration matches the first pattern supported by the terminal, the terminal performs model inference based on the second pattern indicated by the target configuration to obtain the inference result, and the terminal reports the inference result based on the reporting time indicated by the target configuration.

The method further includes:
in a case that the second pattern indicated by the target configuration does not match the first pattern supported by the terminal, the terminal performs any one of the following:
the terminal does not perform model inference;
the terminal does not report the inference result;
the terminal does not update reporting of the inference result; and
the terminal performs model inference after measuring a last measurement resource corresponding to the first pattern to obtain the inference result, and reports the inference result in a time unit, in the reporting time indicated by the target configuration, that is closest to a target time. The target time is a time at which reporting information is generated based on the inference result.

That the second pattern indicated by the target configuration matches the first pattern supported by the terminal may mean that the second pattern indicated by the target configuration is exactly the same as the first pattern supported by the terminal. For example, the second pattern indicated by the target configuration is (P1, P2, P3), and the first pattern supported by the terminal is (P1, P2, P3). In this case, the second pattern indicated by the target configuration matches the first pattern supported by the terminal.

In addition, that the second pattern indicated by the target configuration does not match the first pattern supported by the terminal may mean that the second pattern indicated by the target configuration is not exactly the same as the first pattern supported by the terminal. For example, the second pattern indicated by the target configuration is (P1, P2, P3), and the first pattern supported by the terminal is (P1, P2). In this case, the second pattern indicated by the target configuration does not match the first pattern supported by the terminal.

In an implementation, that the second pattern indicated by the target configuration does not match the first pattern supported by the terminal may include: the second pattern indicated by the target configuration is not exactly the same as the first pattern supported by the terminal, and there is partial consistency between the first pattern supported by the terminal and the second pattern indicated by the target configuration. This "partial consistency" means that parts of the patterns are the same, and share the same sequence. For example, the second pattern indicated by the target configuration is (P1, P2, P3), and the first pattern supported by the terminal is (P1, P2). In a case that the second pattern indicated by the target configuration is not exactly the same as the first pattern supported by the terminal, and the first pattern supported by the terminal is partially the same as the second pattern indicated by the target configuration, the terminal may perform model inference after measuring the last measurement resource corresponding to the first pattern to obtain the inference result, and report the inference result in the time unit, in the reporting time indicated by the target configuration, that is closest to the target time. The target time is the time at which the reporting information is generated based on the inference result. Because the first pattern supported by the terminal is partially the same as the second pattern indicated by the target configuration, the terminal can still perform model inference, and no severe adverse impact is caused to the inference result.

In an implementation, that the second pattern indicated by the target configuration does not match the first pattern supported by the terminal may include: the second pattern indicated by the target configuration is not exactly the same as the first pattern supported by the terminal, and there is no partial consistency between the first pattern supported by the terminal and the second pattern indicated by the target configuration. For example, the second pattern indicated by the target configuration is (P1, P2, P3), and the first pattern supported by the terminal is (P2, P1). In a case that the second pattern indicated by the target configuration is not exactly the same as the first pattern supported by the terminal, and there is no partial consistency between the first pattern supported by the terminal and the second pattern indicated by the target configuration, the terminal may perform any one of the following: the terminal does not perform model inference; the terminal does not report the inference result; and the terminal does not update reporting of the inference result.

In addition, that the reporting information is generated based on the inference result may mean that a physical uplink shared channel (Physical Uplink Shared Channel, PUSCH) or a physical uplink control channel (Physical Uplink Control Channel, PUCCH) is generated based on the inference result after the inference result is obtained, that is, an uplink physical channel is generated.

In addition, that the terminal does not update reporting of the inference result may mean that the terminal reports an inference result that is not updated. For example, the terminal may report a previously reported inference result or report a default inference result.

In an example in which the inference result is a beam, that the terminal does not update reporting of the inference result may mean that the terminal does not update reporting of the beam, that the terminal does not report the inference result may mean that the terminal does not report the beam, and that the inference result is reported may mean that the terminal updates reporting of the beam.

In this implementation, in a case that the second pattern indicated by the target configuration matches the first pattern supported by the terminal, the terminal performs model inference based on the second pattern indicated by the target configuration, and the terminal reports the inference result based on the reporting time indicated by the target configuration. In a case that the second pattern indicated by the target configuration does not match the first pattern supported by the terminal, the terminal performs any one of the following: the terminal does not perform model inference; the terminal does not report the inference result; the terminal does not update reporting of the inference result; and the terminal performs model inference after measuring the last measurement resource corresponding to the first pattern to obtain the inference result, and reports the inference result in the time unit, in the reporting time indicated by the target configuration, that is closest to a target time. The target time is the time at which the reporting information is generated based on the inference result. Therefore, the terminal can perform model inference and reporting of the inference result based on the second pattern and the reporting time indicated by the network side device.

An embodiment of this application further provides an information receiving method, where the information receiving method includes:
a terminal receives a target configuration sent by a network side device, where the target configuration is used to indicate a second pattern or a reporting time, the second pattern is a beam pattern or a measurement resource pattern, and the reporting time is a reporting time of an inference result; and
the terminal performs model inference or reporting of the inference result based on the target configuration.

The target configuration may include at least one piece of fourth set information, and the fourth set information is used to indicate a second pattern of at least one time unit. Alternatively, the target configuration may include at least one piece of fourth set information and a dataset identifier. The dataset identifier is associated with at least one beam, and a beam corresponding to the second pattern indicated by the fourth set information is determined based on the dataset identifier, or the dataset identifier is associated with at least one measurement resource, and a measurement resource corresponding to the second pattern indicated by the fourth set information is determined based on the dataset identifier.

In addition, the fourth set information may include at least one of the following: at least one piece of fifth set information; seventh indication information, used to indicate a quantity of pieces of fifth set information included in the fourth set information; and eighth indication information, used to indicate an ordering relationship of second patterns associated with the fifth set information included in the fourth set information. The fifth set information is used to indicate a second pattern of one time unit. It should be noted that a specific form of the fourth set information is similar to that of the first set information. For details, refer to the description of the first set information. Details are not described herein again. A specific form of the fifth set information is similar to that of the second set information. For details, refer to the description of the second set information. Details are not described herein again.

The reporting time may be represented by a time unit corresponding to the second pattern. For example, the second pattern indicated by the target configuration is (P1, P2, P3). In this case, the network side device may configure the terminal to report in each time unit, that is, report after measuring P1, P2, or P3; or the network side device may configure the terminal to report in a specific time unit, for example, configure the terminal to report after measuring P1.

In this embodiment, the terminal receives the target configuration sent by the network side device, and the target configuration is used to indicate the second pattern or the reporting time. The second pattern is a beam pattern or a measurement resource pattern, and the reporting time is the reporting time of the inference result. The terminal performs model inference or reporting of the inference result based on the target configuration. In this way, the terminal performs model inference based on the second pattern indicated by the network side device, or the terminal reports the inference result based on the reporting time indicated by the network side device, thereby improving an effect of model inference and reporting of the inference result performed by the terminal.

Optionally, that the terminal performs model inference or reporting of the inference result based on the target configuration includes:
in a case that the second pattern indicated by the target configuration matches the first pattern supported by the terminal, the terminal performs model inference based on the second pattern indicated by the target configuration to obtain the inference result, and the terminal reports the inference result based on the reporting time indicated by the target configuration.

The method further includes:
in a case that the second pattern indicated by the target configuration does not match the first pattern supported by the terminal, the terminal performs any one of the following:
the terminal does not perform model inference;
the terminal does not report the inference result;
the terminal does not update reporting of the inference result; and
the terminal performs model inference after measuring a last measurement resource corresponding to the first pattern to obtain the inference result, and reports the inference result in a time unit, in the reporting time indicated by the target configuration, that is closest to a target time. The target time is a time at which reporting information is generated based on the inference result.

It should be noted that, in this implementation of this embodiment, the terminal does not need to report the target information.

A related description of the information receiving method in this embodiment is the same as some implementations in the method shown in FIG. 2. For a specific implementation of the information receiving method, refer to the related description of the embodiment shown in FIG. 2. To avoid repetition, details are not described in this embodiment.

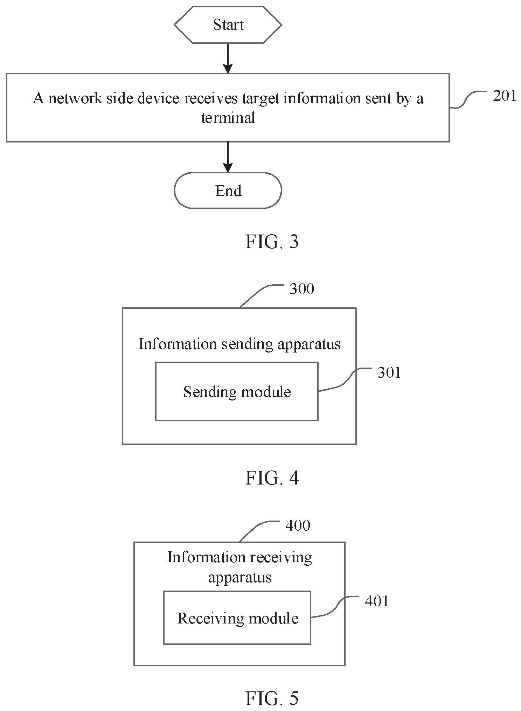

Referring to FIG. 3, FIG. 3 is a flowchart of an information receiving method according to an embodiment of this application. As shown in FIG. 3, the information receiving method includes the following step:
Step 201: A network side device receives target information sent by a terminal.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

Optionally, the method further includes:
the network side device configures the terminal for model inference based on the target information.

Optionally, the first information includes:
at least one piece of first set information, where the first set information is used to indicate a first pattern of at least one time unit.

Optionally, the first information further includes:
a target dataset identifier.

The target dataset identifier is associated with at least one beam, and beams corresponding to the first pattern indicated by the first set information are determined based on the target dataset identifier.

Alternatively, the target dataset identifier is associated with at least one measurement resource, and a measurement resource corresponding to the first pattern indicated by the first set information is determined based on the target dataset identifier.

Optionally, the first set information includes at least one of the following:
at least one piece of second set information;
first indication information, used to indicate a quantity of pieces of second set information included in the first set information; and
second indication information, used to indicate an ordering relationship of first patterns associated with the second set information included in the first set information.

The second set information is used to indicate a first pattern of one time unit.

Optionally, in a case that the first information includes a target dataset identifier, the second set information includes at least one of the following:
third indication information, used to indicate a first beam in at least one beam associated with the target dataset identifier; and
fourth indication information, used to indicate a target measurement resource in at least one measurement resource associated with the target dataset identifier.

The first pattern indicated by the second set information includes the first beam, or
the first pattern indicated by the second set information includes the target measurement resource, or
the first pattern indicated by the second set information includes a second beam in a case that the target measurement resource is associated with the second beam.

Optionally, the second information includes at least one of the following:
fifth indication information, where the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, and the first resources are measurement resources corresponding to first patterns associated with the first set information under a plurality of ordering relationships; and
sixth indication information, where the sixth indication information is used to indicate ordering relationships that are of first patterns in different time unit cycles and that are supported by the terminal.

Optionally, the sixth indication information includes at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

Optionally, the fifth indication information is 1-bit indication information.

Alternatively, in a case that the first information includes at least one piece of first set information and the first set information includes at least one piece of second set information, a quantity of bits occupied by the sixth indication information is the same as the quantity of pieces of second set information included in the first set information.

Optionally, the second information is carried in at least one of the following:
a measurement restriction MR configuration request; or a repetition configuration request.

Optionally, the method further includes:
the network side device sends a target configuration to the terminal, where the target configuration is used to indicate a second pattern or a reporting time, the second pattern is a beam pattern or a measurement resource pattern, and the reporting time is a reporting time of the inference result.

Optionally, before the network side device sends the target configuration to the terminal, the method further includes:
the network side device determines the target configuration based on the target information.

It should be noted that this embodiment is used as an implementation of the network side device corresponding to the embodiment shown in FIG. 2. For a specific implementation thereof, refer to the related description of the embodiment shown in FIG. 2. To avoid repetition, details are not described in this embodiment.

The following describes, by using several specific embodiments, an information reporting method provided in the embodiments of this application.

### Embodiment 1:

In this embodiment, by means of reporting a dataset ID and a setB pattern indication, a terminal is enabled to notify a base station of a supported transmit beam pattern during model inference. A setB pattern for one occasion corresponds to a first pattern of a second set, and setB patterns for a plurality of occasions correspond to a first pattern of a first set.

The terminal sends first information to a network side device, and the network side device determines, based on the first information, a transmit beam pattern used for model inference. The first information includes a dataset identifier and first set information. The first set information is used to indicate transmit beam patterns in different time units for model inputs.

Optionally, during model training, the terminal records a dataset identifier of a dataset used for training.

The dataset identifier may indirectly represent beam directions of all setA.

Optionally, the first set information includes at least one of the following:
an indication of a transmit beam pattern associated with at least one group of second set information;
an indication of a sequence of transmit beam patterns associated with at least one group of second set information; and
an indication of a quantity of transmit beam patterns associated with at least one group of second set information.

The second set information is used to indicate a transmit beam pattern in a single time unit for model inputs.

Optionally, each beam in the transmit beam pattern associated with the second set information may be represented by a relationship between each beam and the dataset identifier. A specific indication manner may be at least one of the following:
indicating a specific beam associated with the dataset identifier;
indicating a specific measurement resource or reference signal resource associated with the dataset identifier; and
indicating a specific beam used by the dataset for training or a specific reference signal resource used by the dataset for training during the model training performed by the terminal.

### Embodiment 2:

In this embodiment, a terminal indicates, to a network side device, that a TU cycle available for reporting is 1 or N, thereby enabling reporting of a generalization capability of a UE-side model.

The terminal sends first information and second information to the network side device, and the network side device determines, based on the first information, a transmit beam pattern used for model inference. The first information includes first set information, or the first information includes a dataset identifier and first set information. The first set information is used to indicate transmit beam patterns in different time units for model inputs. The second information is used to indicate a TU in which an inference result can be reported.

The first set information includes a quantity N of at least one group of second set information. When N>1, the second information includes fifth indication information, and the fifth indication information of 1 bit may be used to indicate whether second set information in different sequences is supported. For example, if the fifth indication information is 0, it indicates that only one sequence of the pattern indicated by the first set information can be supported. In this case, model inference and reporting of the inference result can only be performed with a period of N. If the fifth indication information is 1, it indicates that different sequences that are of a plurality of groups of patterns and that are identified by different pieces of first set information can be supported. In other words, model inference and reporting of the inference result can be performed in all TUs.

Optionally, the fifth indication information may further be indicated by at least one of the following:
a measurement restriction ON/OFF indication, where for example, MR ON indicates that different sequences that are of a plurality of groups of patterns and that are identified by different pieces of first set information can be supported; and
a Repetition ON/OFF indication, where for example, Repetition ON indicates that different sequences that are of a plurality of groups of patterns and that are identified by different pieces of first set information can be supported.

### Embodiment 3:

In this embodiment, a terminal indicates, to a network side device by using a bit map indication, a TU in which an inference result can be reported, thereby enabling reporting of a generalization capability of a UE-side model.

The terminal sends first information and second information to the network side device, and the network side device determines, based on the first information, a transmit beam pattern used for model inference. The first information includes first set information, or the first information includes a dataset identifier and first set information. The first set information is used to indicate transmit beam patterns in different time units for model inputs. The second information is used to indicate a TU in which the inference result can be reported.

The first set information includes a quantity N of a plurality of groups of second set information. The second information includes sixth indication information. When N>1, the sixth indication information of N bits is used to indicate a start location or an end location of a supported pattern sequence, or a pattern location at which the inference result can be reported.

For example, when N=4, a value of 1 is used in the sixth indication information to indicate a start pattern location of a supported pattern sequence.

An example in which the sixth indication information is 1010, and the first set information includes (P1, P2, P3, P4) is used. Because locations of P1 and P3 are set to 1, it indicates that start pattern locations of supported pattern sequences include P1 and P3. Based on an ordering relationship of each pattern in the first set information, the sixth indication information indicates that two pattern sequences, that is, P1, P2, P3, P4, and P3, P4, P1, P2 can be supported. Because the terminal performs model inference and reporting of the inference result after measuring a last pattern, the sixth indication information may further indicate that when a transmit beam pattern is P4 or P2, measurement of input data for one round of inference is completed. Model inference is then performed based on a measurement result, and the inference result is reported.

For example, when N=4, a value of 1 is used in the sixth indication information to indicate a pattern location that can support reporting of the inference result. An example in which the sixth indication information is 1010, and the first set information includes (P1, P2, P3, P4) is used. Because locations of P1 and P3 are set to 1, it indicates that pattern locations at which reporting of the inference result can be supported include P1 and P3. Because the terminal performs model inference and reporting of the inference result after measuring the last pattern, the sixth indication information indicates that last pattern locations of supported pattern sequences include P1 and P3. Based on an ordering relationship of each pattern in the first set information, it can be derived that the supported pattern sequences are respectively P2, P3, P4, P1, and P4, P1, P2, P3.

### Embodiment 4:

In this embodiment, a terminal indicates, to a network side device by reporting a supported pattern, a TU in which an inference result can be reported, thereby enabling reporting of a generalization capability of a UE-side model.

The terminal sends first information to the network, and the network determines, based on the first information, a transmit beam pattern supported by UE for model inference. The first information includes third set information, or includes third set information and a dataset identifier. The third set information is used to indicate transmit beam patterns in different time units for model inputs.

The third set information includes at least one group of first set information.

Optionally, the first set information includes at least one of the following:
an indication of a transmit beam pattern associated with at least one group of second set information;
an indication of a sequence of transmit beam patterns associated with at least one group of second set information; and
an indication of a quantity of transmit beam patterns associated with at least one group of second set information.

The second set information is used to indicate a transmit beam pattern in a single time unit for model inputs.

Optionally, each beam in the transmit beam pattern associated with the second set information may be represented by a relationship between each beam and the dataset identifier. A specific indication manner may be at least one of the following:
indicating a specific beam associated with the dataset identifier;
indicating a specific measurement resource or reference signal resource associated with the dataset identifier; and
indicating a specific beam used by the dataset for training or a specific reference signal resource used by the dataset for training during the model training performed by the terminal.

During model registration, the UE indicates, to a network side, a training dataset identifier, a plurality of groups of setB patterns, and a TU location at which the inference result can be reported. In this way, the network side can configure a corresponding transmit beam pattern for the UE in case of time domain continuous inference for AI-based beam prediction, and configure a proper reporting time based on a capability of the UE.

In an implementation, a first pattern indicated by the second set information is P1, P2, P3, or P4, a first pattern indicated by the first set information is (P1, P2, P3, P4) or (P2, P3, P4, P1), and a first pattern indicated by the third set information is {(P1, P2, P3, P4), (P2, P3, P4, P1)}. The third set information explicitly indicates a first pattern for which an AI model can perform effective inference.

### Embodiment 5:

In this embodiment, a terminal determines, based on a pattern sent by a network side, whether to perform channel state information (Channel State Information, CSI) reporting based on AI inference.

In this embodiment, the network side configures the UE to perform beam reporting in each time unit.

The network side sends a reporting configuration to the UE. The reporting configuration instructs the UE to report a beam update in each time unit.

The UE receives the reporting configuration from the network side, determines, based on the reporting configuration, a second pattern sent by the network side and a sequence of the second pattern, and determines, based on a first pattern that can be supported by an AI model and a sequence of the first pattern, whether to report a beam update and determines a time unit in which reporting is performed.

If the UE determines that the sequence of the first pattern that can be supported by the UE fully or partially matches the sequence of the second pattern sent by the network side, the UE performs model inference and reporting of a beam update after measuring a last measurement resource corresponding to the first pattern.

For example, the second pattern determined by the UE based on the reporting configuration is (P1, P2, P3), while the first pattern supported by the UE is (P1, P2). The network side configures the UE to report in each time unit, that is, to report after measuring P1, P2, or P3. However, the UE only supports a sequence of (P1, P2). Therefore, the UE reports a beam update after measuring P2. After measuring P1, the UE does not report or update the beam report. For P3, because the UE does not match the pattern, the UE may not measure P3. After P3, the UE does not report or update the beam report.

### Embodiment 6:

In this embodiment, a terminal determines, based on a pattern sent by a network side, whether to perform CSI reporting based on AI inference.

In this embodiment, the network side configures the UE to perform beam reporting in a specific time unit.

The network side sends a reporting configuration to the UE. The reporting configuration instructs the UE to report a beam update in some time units.

The UE receives the reporting configuration from the network side, determines, based on the reporting configuration, a second pattern sent by the network side and a sequence of the second pattern, and determines, based on a first pattern that can be supported by an AI model and a sequence of the first pattern, whether to report a beam update and determines a time unit in which reporting is performed.

If the UE determines that the sequence of the first pattern that can be supported by the UE fully or partially matches the sequence of the second pattern sent by the network side, the UE performs model inference after measuring a last measurement resource corresponding to the first pattern, and reports a beam update in a time unit that is configured by the network side and that is closest to a time at which an inference result is obtained.

For example, the second pattern determined by the UE based on the reporting configuration is (P1, P2, P3), while the first pattern that can be supported by the UE is (P1, P2). The network side configures the UE to perform beam reporting after measuring P3. However, the UE only supports a sequence of (P1, P2). Therefore, after measuring P2, the UE first stores the inference result, and then reports a beam update when an uplink reporting resource becomes available after a measurement resource corresponding to P3 ends. For P3, because the UE does not match the pattern, the UE may not measure P3.

### Embodiment 7

In this embodiment, a terminal determines, based on a pattern sent by a network side, whether to perform CSI reporting based on AI inference.

The UE receives a reporting configuration from the network side, determines, based on the reporting configuration, a second pattern sent by the network side and a sequence of the second pattern, and determines, based on a first pattern that can be supported by an AI model and a sequence of the first pattern, whether to report a beam update and determines a time unit in which reporting is performed.

For example, the second pattern determined by the UE based on the reporting configuration is (P2, P1, P3), while the first pattern that can be supported by the UE is (P1, P2). In an implementation, the network side configures the UE to report in each time unit, that is, to report after measuring P1, P2, or P3. In another implementation, the network side configures the UE to perform beam reporting after measuring P3. In both implementations described above, the UE only supports the sequence of (P1, P2). Therefore, the UE performs neither beam measurement nor beam reporting.

The information sending method provided in the embodiments of this application may be performed by an information sending apparatus. In the embodiments of this application, the information sending apparatus provided in the embodiments of this application is described by using an example in which the information sending apparatus performs the information sending method.

Referring to FIG. 4, FIG. 4 is a structural diagram of an information sending apparatus according to an embodiment of this application. A terminal includes the information sending apparatus. As shown in FIG. 4, an information sending apparatus 300 includes:
a sending module 301, configured to send target information to a network side device.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

Optionally, the first information includes:
at least one piece of first set information, where the first set information is used to indicate a first pattern of at least one time unit.

Optionally, the first information further includes:
a target dataset identifier.

The target dataset identifier is associated with at least one beam, and beams corresponding to the first pattern indicated by the first set information are determined based on the target dataset identifier.

Alternatively, the target dataset identifier is associated with at least one measurement resource, and a measurement resource corresponding to the first pattern indicated by the first set information is determined based on the target dataset identifier.

Optionally, the first set information includes at least one of the following:
at least one piece of second set information;
first indication information, used to indicate a quantity of pieces of second set information included in the first set information; and
second indication information, used to indicate an ordering relationship of first patterns associated with the second set information included in the first set information.

The second set information is used to indicate a first pattern of one time unit.

Optionally, in a case that the first information includes a target dataset identifier, the second set information includes at least one of the following:
third indication information, used to indicate a first beam in at least one beam associated with the target dataset identifier; and
fourth indication information, used to indicate a target measurement resource in at least one measurement resource associated with the target dataset identifier.

The first pattern indicated by the second set information includes the first beam, or
the first pattern indicated by the second set information includes the target measurement resource, or
the first pattern indicated by the second set information includes a second beam in a case that the target measurement resource is associated with the second beam.

Optionally, the second information includes at least one of the following:
fifth indication information, where the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, and the first resources are measurement resources corresponding to first patterns associated with the first set information under a plurality of ordering relationships; and
sixth indication information, where the sixth indication information is used to indicate ordering relationships that are of first patterns in different time unit cycles and that are supported by the terminal.

Optionally, the sixth indication information includes at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

Optionally, the fifth indication information is 1-bit indication information.

Alternatively, in a case that the first information includes at least one piece of first set information and the first set information includes at least one piece of second set information, a quantity of bits occupied by the sixth indication information is the same as the quantity of pieces of second set information included in the first set information.

Optionally, the second information is carried in at least one of the following:
a measurement restriction MR configuration request; or a repetition configuration request.

Optionally, the apparatus further includes:
a receiving module, configured to receive a target configuration sent by the network side device, where the target configuration is used to indicate a second pattern or a reporting time, the second pattern is a beam pattern or a measurement resource pattern, and the reporting time is a reporting time of the inference result; and
a first execution module, configured to perform model inference or reporting of the inference result based on the target configuration.

Optionally, the first execution module is specifically configured to:
in a case that the second pattern indicated by the target configuration matches a first pattern supported by the terminal, perform, by the terminal, model inference based on the second pattern indicated by the target configuration to obtain the inference result; and report, by the terminal, the inference result based on the reporting time indicated by the target configuration.

The apparatus further includes:
a second execution module, configured to: in a case that the second pattern indicated by the target configuration does not match the first pattern supported by the terminal, perform any one of the following:
the terminal does not perform model inference;
the terminal does not report the inference result;
the terminal does not update reporting of the inference result; and
the terminal performs model inference after measuring a last measurement resource corresponding to the first pattern to obtain the inference result, and reports the inference result in a time unit, in the reporting time indicated by the target configuration, that is closest to a target time. The target time is a time at which reporting information is generated based on the inference result.

The information sending apparatus in this embodiment of this application may be an electronic device, for example, an electronic device with an operating system, or may be a component such as an integrated circuit or a chip in an electronic device. The electronic device may be a terminal, or may be another device other than a terminal. For example, the terminal may include but is not limited to the foregoing listed types of the terminal 11. The another device may be a server, a network attached storage (Network Attached Storage, NAS), or the like. This is not specifically limited in this embodiment of this application.

The information sending apparatus provided in this embodiment of this application can implement processes implemented in the method embodiment in FIG. 2, and achieve same technical effects. To avoid repetition, details are not described herein again.

Referring to FIG. 5, FIG. 5 is a structural diagram of an information receiving apparatus according to an embodiment of this application. A network side device includes the information receiving apparatus. As shown in FIG. 5, an information receiving apparatus 400 includes:
a receiving module 401, configured to receive target information sent by a terminal.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

Optionally, the first information includes:
at least one piece of first set information, where the first set information is used to indicate a first pattern of at least one time unit.

Optionally, the first information further includes:
a target dataset identifier.

The target dataset identifier is associated with at least one beam, and beams corresponding to the first pattern indicated by the first set information are determined based on the target dataset identifier.

Alternatively, the target dataset identifier is associated with at least one measurement resource, and a measurement resource corresponding to the first pattern indicated by the first set information is determined based on the target dataset identifier.

Optionally, the first set information includes at least one of the following:
at least one piece of second set information;
first indication information, used to indicate a quantity of pieces of second set information included in the first set information; and
second indication information, used to indicate an ordering relationship of first patterns associated with the second set information included in the first set information.

The second set information is used to indicate a first pattern of one time unit.

Optionally, in a case that the first information includes a target dataset identifier, the second set information includes at least one of the following:
third indication information, used to indicate a first beam in at least one beam associated with the target dataset identifier; and
fourth indication information, used to indicate a target measurement resource in at least one measurement resource associated with the target dataset identifier.

The first pattern indicated by the second set information includes the first beam, or
the first pattern indicated by the second set information includes the target measurement resource, or
the first pattern indicated by the second set information includes a second beam in a case that the target measurement resource is associated with the second beam.

Optionally, the second information includes at least one of the following:
fifth indication information, where the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, and the first resources are measurement resources corresponding to first patterns associated with the first set information under a plurality of ordering relationships; and
sixth indication information, where the sixth indication information is used to indicate ordering relationships that are of first patterns in different time unit cycles and that are supported by the terminal.

Optionally, the sixth indication information includes at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

Optionally, the fifth indication information is 1-bit indication information.

Alternatively, in a case that the first information includes at least one piece of first set information and the first set information includes at least one piece of second set information, a quantity of bits occupied by the sixth indication information is the same as the quantity of pieces of second set information included in the first set information.

Optionally, the second information is carried in at least one of the following:
a measurement restriction MR configuration request; or a repetition configuration request.

Optionally, the apparatus further includes:
a sending module, configured to send a target configuration to the terminal. The target configuration is used to indicate a second pattern or a reporting time, the second pattern is a beam pattern or a measurement resource pattern, and the reporting time is a reporting time of the inference result.

Optionally, the apparatus further includes:
a determining module, configured to determine the target configuration based on the target information.

The information receiving apparatus in this embodiment of this application may be an electronic device, for example, an electronic device with an operating system, or may be a component such as an integrated circuit or a chip in an electronic device. The electronic device may be a terminal, or may be another device other than a terminal. For example, the terminal may include but is not limited to the foregoing listed types of the terminal 11. The another device may be a server, a network attached storage (Network Attached Storage, NAS), or the like. This is not specifically limited in this embodiment of this application.

The information receiving apparatus provided in this embodiment of this application can implement processes implemented in the method embodiment in FIG. 3, and achieve same technical effects. To avoid repetition, details are not described herein again.

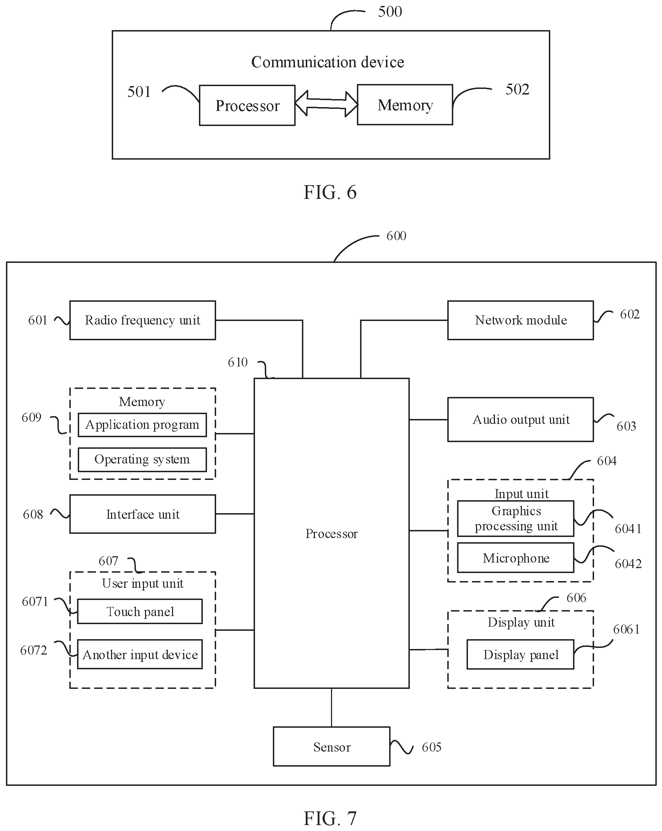

Optionally, as shown in FIG. 6, an embodiment of this application further provides a communication device 500, including a processor 501 and a memory 502. The memory 502 stores a program or instructions capable of running on the processor 501. For example, when the communication device 500 is a terminal, the steps of the foregoing information sending method embodiment applied to a terminal are implemented when the program or the instructions are executed by the processor 501, and same technical effects can be achieved. To avoid repetition, details are not described herein again. When the communication device 500 is a network side device, the steps of the foregoing information receiving method embodiment applied to a network side device are implemented when the program or the instructions are executed by the processor 501, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment. Each implementing process and implementation of the foregoing method embodiment are applicable to the terminal embodiment, and same technical effects can be achieved.

Specifically, FIG. 7 is a schematic diagram of a hardware structure of a terminal for implementing an embodiment of this application.

A terminal 600 includes but is not limited to at least some components in a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) that supplies power to each component. The power supply may be logically connected to the processor 610 by using a power management system, so as to implement functions such as charging management, discharging management, and power consumption management by using the power management system. The structure of the terminal shown in FIG. 7 does not constitute a limitation on the terminal. The terminal may include more or fewer components than those shown in the figure, or combine some components, or have different component arrangements. Details are not described herein again.

It should be understood that in this embodiment of this application, the input unit 604 may include a graphics processing unit (Graphics Processing Unit, GPU) 6041 and a microphone 6042, and the GPU 6041 processes image data of a still picture or a video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 601 may transmit the downlink data to the processor 610 for processing. In addition, the radio frequency unit 601 may send uplink data to the network side device. Generally, the radio frequency unit 601 includes but is not limited to an antenna, an amplifier, a transceiver, a coupler, a low-noise amplifier, a duplexer, and the like.

The memory 609 may be configured to store a software program or instructions and various types of data. The memory 609 may mainly include a first storage area for storing a program or instructions and a second storage area for storing data. The first storage area may store an operating system, an application program or instructions required by at least one function (for example, a sound play function or an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memory.

The processor 610 may include one or more processing units. Optionally, the processor 610 integrates an application processor and a modem processor. The application processor mainly processes operations related to an operating system, a user interface, an application program, and the like. The modem processor mainly processes a wireless communication signal, such as a baseband processor. It may be understood that, the foregoing modem processor may not be integrated into the processor 610.

The radio frequency unit 601 is configured to:
send target information to the network side device.

The target information includes at least one of the following:
first information, where the first information is used to indicate a first pattern, the first pattern is a measurement resource pattern associated with model inputs of a target model, and the target model is used by the terminal to perform model inference; and
second information, where the second information is used to indicate a terminal capability of reporting the first result, and the first result is an inference result of the model inference.

Optionally, the first information includes:
at least one piece of first set information, where the first set information is used to indicate a first pattern of at least one time unit.

Optionally, the first information further includes:
a target dataset identifier.

The target dataset identifier is associated with at least one beam, and beams corresponding to the first pattern indicated by the first set information are determined based on the target dataset identifier.

Alternatively, the target dataset identifier is associated with at least one measurement resource, and a measurement resource corresponding to the first pattern indicated by the first set information is determined based on the target dataset identifier.

Optionally, the first set information includes at least one of the following:
at least one piece of second set information;
first indication information, used to indicate a quantity of pieces of second set information included in the first set information; and
second indication information, used to indicate an ordering relationship of first patterns associated with the second set information included in the first set information.

The second set information is used to indicate a first pattern of one time unit.

Optionally, in a case that the first information includes a target dataset identifier, the second set information includes at least one of the following:
third indication information, used to indicate a first beam in at least one beam associated with the target dataset identifier; and
fourth indication information, used to indicate a target measurement resource in at least one measurement resource associated with the target dataset identifier.

The first pattern indicated by the second set information includes the first beam, or
the first pattern indicated by the second set information includes the target measurement resource, or
the first pattern indicated by the second set information includes a second beam in a case that the target measurement resource is associated with the second beam.

Optionally, the second information includes at least one of the following:
fifth indication information, where the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, and the first resources are measurement resources corresponding to first patterns associated with the first set information under a plurality of ordering relationships; and
sixth indication information, where the sixth indication information is used to indicate ordering relationships that are of first patterns in different time unit cycles and that are supported by the terminal.

Optionally, the sixth indication information includes at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

Optionally, the fifth indication information is 1-bit indication information.

Alternatively, in a case that the first information includes at least one piece of first set information and the first set information includes at least one piece of second set information, a quantity of bits occupied by the sixth indication information is the same as the quantity of pieces of second set information included in the first set information.

Optionally, the second information is carried in at least one of the following:
a measurement restriction MR configuration request; or a repetition configuration request.

Optionally, the radio frequency unit 601 is further configured to:
receive a target configuration sent by the network side device, where the target configuration is used to indicate a second pattern or a reporting time, the second pattern is a beam pattern or a measurement resource pattern, and the reporting time is a reporting time of the inference result.

The processor 610 is configured to perform model inference or reporting of the inference result based on the target configuration.

Optionally, the processor 610 is specifically configured to:
in a case that the second pattern indicated by the target configuration matches a first pattern supported by the terminal, perform, by the terminal, model inference based on the second pattern indicated by the target configuration to obtain the inference result; report, by the terminal, the inference result based on the reporting time indicated by the target configuration; and
in a case that the second pattern indicated by the target configuration does not match the first pattern supported by the terminal, perform any one of the following:
   the terminal does not perform model inference;
   the terminal does not report the inference result;
   the terminal does not update reporting of the inference result; and
   the terminal performs model inference after measuring a last measurement resource corresponding to the first pattern to obtain the inference result, and reports the inference result in a time unit, in the reporting time indicated by the target configuration, that is closest to a target time. The target time is a time at which reporting information is generated based on the inference result.

It may be understood that for implementing processes of the implementations mentioned in this embodiment, refer to the related description of FIG. 2 in the method embodiment, and same or corresponding technical effects are achieved. To avoid repetition, details are not described herein again.

Specifically, the terminal in this embodiment of this application further includes instructions or a program that is stored in the memory 609 and that is capable of running on the processor 610. The processor 610 invokes the instructions or the program in the memory 609 to perform the method performed by the modules shown in FIG. 4, and same technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 3. The network side device embodiment corresponds to the foregoing information receiving method embodiment applied to a network side device. Each implementing process and implementation of the foregoing method embodiment may be applied to the network side device embodiment, and same technical effects can be achieved.

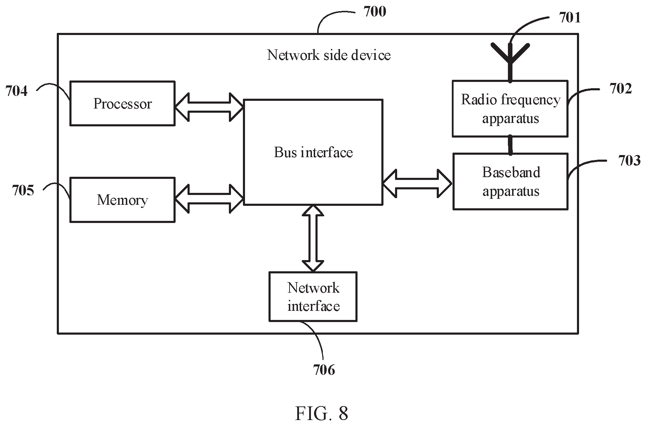

Specifically, an embodiment of this application further provides a network side device. As shown in FIG. 8, a network side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information by using the antenna 701, and sends the received information to the baseband apparatus 703 for processing. In a downlink direction, the baseband apparatus 703 processes to-be-sent information, and sends the processed information to the radio frequency apparatus 702. After processing the received information, the radio frequency apparatus 702 sends the processed information by using the antenna 701.

The method performed by a network side device in the foregoing embodiment may be implemented in the baseband apparatus 703. The baseband apparatus 703 includes a baseband processor.

For example, the baseband apparatus 703 may include at least one baseband board. A plurality of chips are disposed on the baseband board. As shown in FIG. 8, one of the chips is, for example, the baseband processor, and is connected to the memory 705 by using a bus interface, to invoke a program in the memory 705 to perform an operation of a network device shown in the foregoing method embodiment.

The network side device may further include a network interface 706, and the interface is, for example, a common public radio interface (Common Public Radio Interface, CPRI).

Specifically, the network side device 700 in this embodiment of this application further includes instructions or a program stored in the memory 705 and capable of running on the processor 704. The processor 704 invokes the instructions or the program in the memory 705 to perform the method performed by the modules shown in FIG. 5, and same technical effects are achieved. To avoid repetition, details are not described herein again.

An embodiment of this application further provides a readable storage medium. The readable storage medium stores a program or instructions. When the program or the instructions are executed by a processor, various processes in the foregoing information sending method or information receiving method embodiments are implemented, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement various processes in the foregoing information sending method or information receiving method embodiments, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing information sending method or information receiving method embodiments, and same technical effects can be achieved. To avoid repetition, details are not described herein again.

An embodiment of this application further provides an information receiving and sending system, including a terminal and a network side device. The terminal may be configured to perform the steps of the foregoing information sending method applied to a terminal, and the network side device may be configured to perform the steps of the foregoing information receiving method applied to a network side device.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples can be combined in other examples.

According to the foregoing descriptions of the implementations, a person skilled in the art may clearly understand that the methods in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for enabling a terminal or a network side device to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An information sending method, comprising:
sending, by a terminal, target information to a network side device, wherein
the target information comprises at least one of the following:
first information, wherein the first information is used to indicate a first pattern, the first pattern is a beam pattern or a measurement resource pattern associated with model inputs of a target model, and the target model is used by the terminal to perform model inference; and
second information, wherein the second information is used to indicate a terminal capability of reporting the first result, and the first result is an inference result of the model inference.

2. The method according to claim 1, wherein the first information comprises:
at least one piece of first set information, wherein the first set information is used to indicate a first pattern of at least one time unit.

3. The method according to claim 2, wherein the first information further comprises:
a target dataset identifier, wherein
the target dataset identifier is associated with at least one beam, and beams corresponding to the first pattern indicated by the first set information are determined based on the target dataset identifier; or
the target dataset identifier is associated with at least one measurement resource, and a measurement resource corresponding to the first pattern indicated by the first set information is determined based on the target dataset identifier.

4. The method according to claim 2 or 3, wherein the first set information comprises at least one of the following:
at least one piece of second set information;
first indication information, used to indicate a quantity of pieces of second set information comprised in the first set information; and
second indication information, used to indicate an ordering relationship of first patterns associated with the second set information comprised in the first set information, wherein
the second set information is used to indicate a first pattern of one time unit.

5. The method according to claim 4, wherein in a case that the first information comprises a target dataset identifier, the second set information comprises at least one of the following:
third indication information, used to indicate a first beam in at least one beam associated with the target dataset identifier; and
fourth indication information, used to indicate a target measurement resource in at least one measurement resource associated with the target dataset identifier.
the first pattern indicated by the second set information comprises the first beam; or
the first pattern indicated by the second set information comprises the target measurement resource; or
the first pattern indicated by the second set information comprises a second beam in a case that the target measurement resource is associated with the second beam.

6. The method according to any one of claims 2 to 5, wherein the second information comprises at least one of the following:
fifth indication information, wherein the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, wherein the first resources are measurement resources corresponding to first patterns associated with the first set information under a plurality of ordering relationships; and
sixth indication information, wherein the sixth indication information is used to indicate ordering relationships that are of first patterns in different time unit cycles and that are supported by the terminal.

7. The method according to claim 6, wherein the sixth indication information comprises at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

8. The method according to claim 6 or 7, wherein the fifth indication information is 1-bit indication information; or
in a case that the first information comprises at least one piece of first set information and the first set information comprises at least one piece of second set information, a quantity of bits occupied by the sixth indication information is the same as the quantity of pieces of second set information comprised in the first set information.

9. The method according to any one of claims 1 to 8, wherein the second information is carried in at least one of the following:
a measurement restriction MR configuration request; or a repetition configuration request.

10. The method according to any one of claims 1 to 9, wherein the method further comprises:
receiving, by the terminal, a target configuration sent by the network side device, wherein the target configuration is used to indicate a second pattern or a reporting time, the second pattern is a beam pattern or a measurement resource pattern, and the reporting time is a reporting time of the inference result; and
performing, by the terminal, model inference or reporting of the inference result based on the target configuration.

11. The method according to claim 10, wherein the performing, by the terminal, model inference or reporting of the inference result based on the target configuration comprises:
in a case that the second pattern indicated by the target configuration matches the first pattern supported by the terminal, performing, by the terminal, model inference based on the second pattern indicated by the target configuration to obtain the inference result; and reporting, by the terminal, the inference result based on the reporting time indicated by the target configuration; and
the method further comprises:
in a case that the second pattern indicated by the target configuration does not match the first pattern supported by the terminal, performing, by the terminal, any one of the following:
not performing, by the terminal, model inference;
not reporting, by the terminal, the inference result;
not updating, by the terminal, reporting of the inference result; and
performing, by the terminal, model inference after measuring a last measurement resource corresponding to the first pattern to obtain the inference result, and reporting the inference result in a time unit, in the reporting time indicated by the target configuration, that is closest to a target time, wherein the target time is a time at which reporting information is generated based on the inference result.

12. An information receiving method, comprising:
receiving, by a network side device, target information sent by a terminal, wherein
the target information comprises at least one of the following:
first information, wherein the first information is used to indicate a first pattern, the first pattern is a beam pattern or a measurement resource pattern associated with model inputs of a target model, and the target model is used by the terminal to perform model inference; and
second information, wherein the second information is used to indicate a terminal capability of reporting the first result, and the first result is an inference result of the model inference.

13. The method according to claim 12, wherein the first information comprises:
at least one piece of first set information, wherein the first set information is used to indicate a first pattern of at least one time unit.

14. The method according to claim 13, wherein the first information further comprises:
a target dataset identifier, wherein
the target dataset identifier is associated with at least one beam, and beams corresponding to the first pattern indicated by the first set information are determined based on the target dataset identifier; or
the target dataset identifier is associated with at least one measurement resource, and a measurement resource corresponding to the first pattern indicated by the first set information is determined based on the target dataset identifier.

15. The method according to claim 13 or 14, wherein the first set information comprises at least one of the following:
at least one piece of second set information;
first indication information, used to indicate a quantity of pieces of second set information comprised in the first set information; and
second indication information, used to indicate an ordering relationship of first patterns associated with the second set information comprised in the first set information, wherein
the second set information is used to indicate a first pattern of one time unit.

16. The method according to claim 15, wherein in a case that the first information comprises a target dataset identifier, the second set information comprises at least one of the following:
third indication information, used to indicate a first beam in at least one beam associated with the target dataset identifier; and
fourth indication information, used to indicate a target measurement resource in at least one measurement resource associated with the target dataset identifier.
the first pattern indicated by the second set information comprises the first beam; or
the first pattern indicated by the second set information comprises the target measurement resource; or
the first pattern indicated by the second set information comprises a second beam in a case that the target measurement resource is associated with the second beam.

17. The method according to any one of claims 13 to 16, wherein the second information comprises at least one of the following:
fifth indication information, wherein the fifth indication information is used to indicate whether the terminal supports first patterns having different ordering relationships in different time unit cycles, and in a case that the terminal supports first patterns having different ordering relationships in different time unit cycles, it indicates that the terminal supports performing model inference based on measurement results of first resources and reporting the first result, wherein the first resources are measurement resources corresponding to first patterns associated with the first set information under a plurality of ordering relationships; and
sixth indication information, wherein the sixth indication information is used to indicate ordering relationships that are of first patterns in different time unit cycles and that are supported by the terminal.

18. The method according to claim 17, wherein the sixth indication information comprises at least one of the following:
indication information of a 1st first pattern under each of the ordering relationships that are of the first patterns in different time unit cycles and that are supported by the terminal;
indication information of a last first pattern under each of the ordering relationships that are of the first patterns in different time unit cycles and that are supported by the terminal; and
indication information of a first pattern corresponding to a time unit in which the terminal is capable of reporting the first result.

19. The method according to claim 17 or 18, wherein the fifth indication information is 1-bit indication information; or
in a case that the first information comprises at least one piece of first set information and the first set information comprises at least one piece of second set information, a quantity of bits occupied by the sixth indication information is the same as the quantity of pieces of second set information comprised in the first set information.

20. The method according to any one of claims 12 to 19, wherein the second information is carried in at least one of the following:
a measurement restriction MR configuration request; or a repetition configuration request.

21. The method according to any one of claims 12 to 20, wherein the method further comprises:
sending, by the network side device, a target configuration to the terminal, wherein the target configuration is used to indicate a second pattern or a reporting time, the second pattern is a measurement resource pattern, and the reporting time is a reporting time of the inference result.

22. The method according to claim 21, wherein before the sending, by the network side device, a target configuration to the terminal, the method further comprises:
determining, by the network side device, the target configuration based on the target information.

23. An information sending apparatus, wherein a terminal comprises the information sending apparatus, and the apparatus comprises:
a sending module, configured to send target information to a network side device, wherein
the target information comprises at least one of the following:
first information, wherein the first information is used to indicate a first pattern, the first pattern is a measurement resource pattern associated with model inputs of a target model, and the target model is used by the terminal to perform model inference; and
second information, wherein the second information is used to indicate a terminal capability of reporting the first result, and the first result is an inference result of the model inference.

24. An information receiving apparatus, wherein a network side device comprises the information receiving apparatus, and the apparatus comprises:
a receiving module, configured to receive target information sent by a terminal, wherein
the target information comprises at least one of the following:
first information, wherein the first information is used to indicate a first pattern, the first pattern is a measurement resource pattern associated with model inputs of a target model, and the target model is used by the terminal to perform model inference; and
second information, wherein the second information is used to indicate a terminal capability of reporting the first result, and the first result is an inference result of the model inference.

25. A terminal, comprising a processor and a memory, wherein the memory stores a program or instructions capable of running on the processor, and the program or instructions are executed by the processor to implement the steps of the information sending method according to any one of claims 1 to 11.

26. A network side device, comprising a processor and a memory, wherein the memory stores a program or instructions capable of running on the processor, and the program or the instructions are executed by the processor to implement the steps of the information receiving method according to any one of claims 12 to 22.

27. A chip, wherein the chip comprises a processor and a communication interface, the communication interface is coupled to the processor, and the processor is configured to run a program or instructions to implement the steps of the information sending method according to any one of claims 1 to 11 or the steps of the information receiving method according to any one of claims 12 to 22.

28. A readable storage medium, wherein the readable storage medium stores a program or instructions, and the program or the instructions are executed by a processor to implement the steps of the information sending method according to any one of claims 1 to 11, or to implement the steps of the information receiving method according to any one of claims 12 to 22.
